# Europäisches Patentamt

# European Patent Office

# Office européen des brevets

(11) Veröffentlichungsnummer: **0 121 099**

**B1**

(12) # EUROPÄISCHE PATENTSCHRIFT

(45) Veröffentlichungstag der Patentschrift:
29.06.88

(51) Int. Cl.⁴: **C 02 F 1/44,** B 01 D 13/00

(21) Anmeldenummer: **84102107.4**

(22) Anmeldetag: **29.02.84**

(54) Vorrichtung zur Gewinnung von Trinkflüssigkeit aus Meerwasser, verunreinigtem Wasser od.dgl. durch Osmose.

(30) Priorität: **03.03.83 DE 8306031 U**

(43) Veröffentlichungstag der Anmeldung:
**10.10.84 Patentblatt 84/41**

(45) Bekanntmachung des Hinweises auf die Patenterteilung:
**29.06.88 Patentblatt 88/26**

(84) Benannte Vertragsstaaten:
**BE CH DE FR GB IT LI NL SE**

(56) Entgegenhaltungen:
**EP-A-0 011 798**
**DE-C-249 123**

(73) Patentinhaber: **Stache, Knut, Kittlerstrasse 6, D-6100 Darmstadt (DE)**

(72) Erfinder: **Stache, Knut, Kittlerstrasse 6, D-6100 Darmstadt (DE)**

(74) Vertreter: **Katscher, Helmut, Dipl.- Ing., Bismarckstrasse 29, D-6100 Darmstadt (DE)**

LIBER, STOCKHOLM 1988

## Beschreibung

Die Erfindung betrifft eine Vorrichtung zur Gewinnung von Trinkflüssigkeit aus Meerwasser, verunreinigtem Wasser oder dgl. durch Osmose mit einem Behälter, der einen genießbaren, osmotische Wirksamen Stoff enthält, und dessen Außenwand mindestens teilweise aus einer semipermeablen Membran besteht.

Eine derartige Vorrichtung ist bekannt (EP-A-11 798). Die bekannte Vorrichtung ist in erster Linie für eine einmalige Verwendung bestimmt. Eine mehrfache Verwendung ist nur möglich, wenn in den Folienbeutel, der bei der bekannten Vorrichtung den Behälter bildet, mehrere getrennt zu öffnende Kapseln mit dem osmotisch Wirksamen Stoff eingebracht werden. Eine mehrfache Verwendung wird in den meisten Fällen jedoch daran scheitern, daß die semipermeable Membran den empfindlichsten Teil der Vorrichtung bildet, und daß schon die Möglichkeit einer längeren Aufbewahrung der gewonnenen Trinkflüssigkeit in dem Behälter daran scheitert, daß die Membran leicht zerstört werden kann.

Aufgabe der Erfindung ist es daher, eine Vorrichtung der eingangs genannten Gattung so auszugestalten, daß die gewonnene Trinkflüssigkeit in dem Behälter über längere Zeit aufbewahrt werden kann und daß mindestens wesentliche Teil der Vorrichtung mehrfach verwendet werden können.

Diese Aufgabe wird erfindungsgemäß dadurch gelöst, daß der Behälter aus einem flüssigkeitsundurchlässigen Sammelbehältnis und einem daran abnehmbar angebrachten Osmoseteil besteht, dessen Außenwand mindestens teilweise aus der semipermeablen Membran besteht

Nachdem das Sammelbehältnis durch Osmose mit Trinkflüssigkeit gefüllt wurde, kann das Osmoseteil abgenommen werden. Das verbleibende Sammelbehältnis ist auch für eine lange Lagerung der Trinkflüssigkeit ausreichend stabil, da es keine gegen eine Beschädigung anfällige Membran in seiner Wandung aufweist. Das Sammelbehältnis ist mehrfach verwendbar; das Osmoseteil, das vorzugsweise den genießbaren, osmotisch wirksamen Stoff enthält, wird nach einer einmaligen Benutzung weggeworfen. Das Sammelbehältnis kann als stabiler verschließbarer Lagerbehälter ausgeführt sein, der die gewonnene Trinkflüssigkeit für einen verhältnismäßig langen Zeitraum sicher aufnimmt.

Gemäß einer Ausgestaltung des Erfindungsgedankens ist vorgesehen, daß der Behälter außer dem genießbaren, osmotisch wirksamen Stoff Ionenaustauschmaterial enthält. Diese Maßnahme ermöglicht es, eine Membran mit einem geringeren Salzrückhalt von beispielsweise 85 % zu verwenden, die einen schnelleren Wasserdurchfluß bewirkt, so daß schon nach verhältnismäßig kurzer Zeit eine größere Menge von Trinkflüssigkeit zur Verfügung steht. Diese gewonnene Trinkflüssigkeit enthält jedoch noch so viel Salz, daß sie nicht unmittelbar zum menschlichen Genuß geeignet ist. Die hohe Salzkonzentration in der gewonnenen Trinkflüssigkeit wird durch das Ionenaustauschmaterial abgebaut. Durch diese Kombination von Osmose und Ionenaustausch erreicht man, daß die Gewinnung der Trinkflüssigkeit verhältnismäßig rasch vor sich geht, ohne daß eine zu hohe Salzkonzentration in der Trinkflüssigkeit verbleibt. Im Vergleich zu einem Entsalzungsvorgang, der allein auf der Grundlage des Ionenaustauschs durchgeführt wird, wird wesentlich weniger Ionenaustauschmaterial benötigt. Außerdem werden durch die vorangeschaltete Osmose auch Bakterien und sämtliche Verunreinigungen entfernt, während bei der Entsalzung mit Ionenaustauschern allein zwar das Salz entfernt wird, aber alle Verunreinigungen im Wasser verbleiben.

Eine andere Möglichkeit, bei einer für einen hohen Wasserdurchlaß ausgelegten Membran gleichwohl eine weitgehende Entsalzung zu erreichen, besteht bei einer Vorrichtung in Weiterbildung des Erfindungsgedankens darin, daß die semipermeable Membran mit ihrer aktiven Seite nach innen angebracht ist. Semipermeable Membranen bestehen aus mindestens zwei Schichten, nämlich einer salzundurchlässigen aktiven Schicht und einer sehr porösen, salzdurchlässigen Trägerschicht. Üblicherweise wird die Trägerschicht auf der Innenseite angebracht, d.h. auf der dem Salzwasser abgewandten Seite. Im Gegensatz dazu wurde bei der vorliegenden Erfindung erkannt, daß die poröse Trägerschicht vorteilhaft auf der Außenseite der Membran, d.h. der dem Meerwasser oder dgl. zugewandten Seite angeordnet werden kann, und daß dabei eine Erhöhung der Osmoseleistung eintritt.

Trockene semipermeable Membranen, wie sie für die Umkehrosmose oder Druckosmose verwendet werden, können für die natürliche Osmose nicht verwendet werden, weil diese ohne Druck arbeitet. Da die verwendeten Membranen nicht saugfähig sind, genügt es für die Einleitung des Osmosevorgangs nicht, die Membranen erst vor der Benutzung anzufeuchten. Es müssen feuchte Membranen verwendet werden, die auch während des oftmals langen Lagerung bis zur Benutzung nicht austrocknen dürfen. Wenn der genießbare, osmotisch wirksame Stoff die Membran bereits während der Lagerung berührt, trocknet er die Membran aus und macht sie damit unbrauchbar. Bei der bekannten Vorrichtung wird der osmotisch wirksame Stoff während der Lagerung getrennt von der Membran untergebracht und erst bei der Benutzung der Vorrichtung mit der feuchten Membran in Berührung gebracht.

Um zu erreichen, daß der osmotisch wirksame Stoff bereits während der Lagerung der Vorrichtung in Berührung mit der Membran gehalten werden kann, ohne die Membran auszutrocknen und damit unbrauchbar zu machen, ist in weiterer Ausgestaltung der Erfindung vorzugsweise vorgesehen, daß die Außenseite der semipermeablen Membran mit einer dünnen Schicht eines wasserlöslichen Materials beschichtet ist. Dieses lösliche Material kann z. B. Zuckerlösung oder Sirup sein. Es genügt, eine sehr dünne Schicht des löslichen Materials aufzutragen. Der genießbare, osmotisch wirksame Stoff, z. B. Fructose, kann in unmittelbarer Berührung mit der Membran gelagert werden, da die Feuchtigkeit aus der Membran nach beiden Seiten herausgezogen wird, so daß sich auf beiden Seiten eine dünne Schicht eines feuchten Breis bildet. Dadurch wird die Membran vor dem Austrocknen geschützt.

Bei der Benutzung der Vorrichtung, d.h. bei der Gewinnung von Trinkflüssigkeit, stellt die auf der Außenseite der semipermeablen Membran aufgetragene Schicht des löslichen, hygroskopischen Materials kein Hindernis dar, weil diese Schicht rasch abgewaschen wird.

Anstelle des hygroskopischen, löslichen Materials für die Beschichtung der Außenseite der Membran kann auch Öl oder Fett verwendet werden, wodurch ebenfalls ein Austrocknen der Membran durch den osmotisch wirksamen Stoff verhindert wird.

Weitere vorteilhafte Ausgestaltungen des Erfindungsgedankens sind Gegenstand weiterer Unteransprüche.

Die Erfindung wird nachfolgend an Ausführungsbeispielen näher erläutert, die in der Zeichnung dargestellt sind.

Es zeigt:

Fig. 1 eine zweiteilige Vorrichtung zur Gewinnung von Trinkflüssigkeit in perspektivischer Darstellungsweise,

Fig. 2 den oberen Bereich einer abgewandelten Ausführungsform und

Fig. 3 einen vergrößerten Schnitt im Bereich der Ausgußöffnung einer weiteren abgewandelten Ausführungsform.

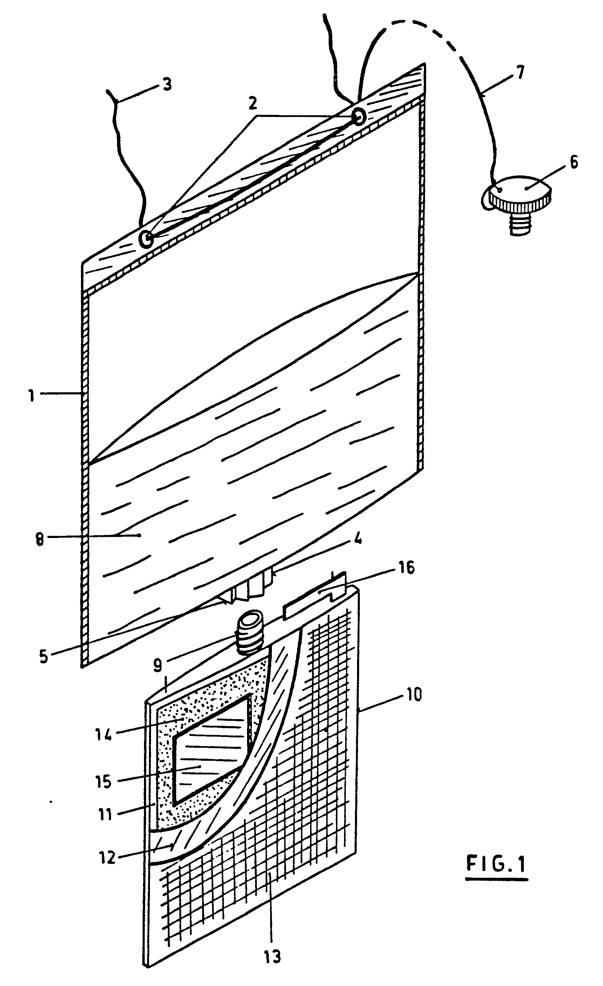

Die in Fig. 1 gezeigte Vorrichtung zur Gewinnung von Trinkflüssigkeit aus Meerwasser, verunreinigtem Wasser oder dgl. ist zweiteilig ausgeführt. Sie besteht aus einem flüssigkeitsundurchlässigen Sammelbehältnis 1, das als Folienbeutel ausgebildet ist. Der Folienbeutel hat an seiner Oberkante zwei Aufhängeösen 2, durch die eine Aufhängeschnur 3 geführt ist. An der Unterseite des Folienbeutels 1 befindet sich ein rundes Anschlußstück 4 mit Innengewinde. An seiner Außenseite ist das Anschlußstück 4 mit sägezahnähnlichen Zacken 5 versehen.

Ein Verschlußstöpsel 6, der in das Innengewinde des Anschlußstücks 4 passt, ist mit einer Schnur 7 an einer der Ösen 2 unverlierbar befestigt.

Beim dargestellten Ausführungsbeispiel ist das Sammelbehältnis 1 etwa zur Hälfte mit Trinkflüssigkeit 8 gefüllt.

Während der Gewinnung der Trinkflüssigkeit ist in das Innengewinde des Anschlußstücks 4 ein mit Außengewinde versehenes Anschlußstück 9 eingeschraubt, das sich an der Oberseite eines Osmoseteils 10 befindet. Das Osmoseteil 10 ist als flache Kassette ausgeführt und besteht aus einem Kunststoffrahmen 11, der auf beiden Seiten mit einer semipermeablen Membran 12 bespannt ist. Die Außenseite der Membran 12 ist mit einer sehr dünnen Schicht eines hygroskopischen Materials, beispielsweise Sirup, bestrichen. Über der Membran 12 ist ein Stoffgewebe 13 angebracht, das vorzugsweise die Form eines Schlauchstücks hat, das das Osmoseteil 10 straff umschließt.

Das Osmoseteil 10, das der deutlicheren Darstellung halber in Fig. 1 teilweise aufgebrochen dargestellt ist, enthält als genießbaren, osmotisch wirksamen Stoff 14 pulvrige Fructose oder Glycin.

Außerdem enthält das Osmoseteil 10 Ionenaustauschmaterial 15, das in einem oder mehreren flüssigkeitsdurchlässigen Beuteln verpackt ist. Die Beutel bestehen aus porösem Stoff oder Papier. Anstelle der mit Ionenaustauschmaterial 15 gefüllten Beutel oder zusätzlich zu diesen können Beutel mit Geschmackszusätzen verwendet werden. Der Inhalt dieser Beutel ist während der Lagerung von der Fructose 14 getrennt; erst wenn viel Wasser in das Osmoseteil 10 gelangt, vermischt sich der Inhalt dieser Beutel mit der Fructose.

An der Oberseite des Osmoseteils 10 ist neben dem Anschlußstück 9 eine federnde Sperrklinke 16 angeordnet, die in die Zacken 5 des Anschlußstücks 4 greift, und ein unbeabsichtigtes Lösen des Osmoseteils 10 vom Sammelbehälter 1 verhindert.

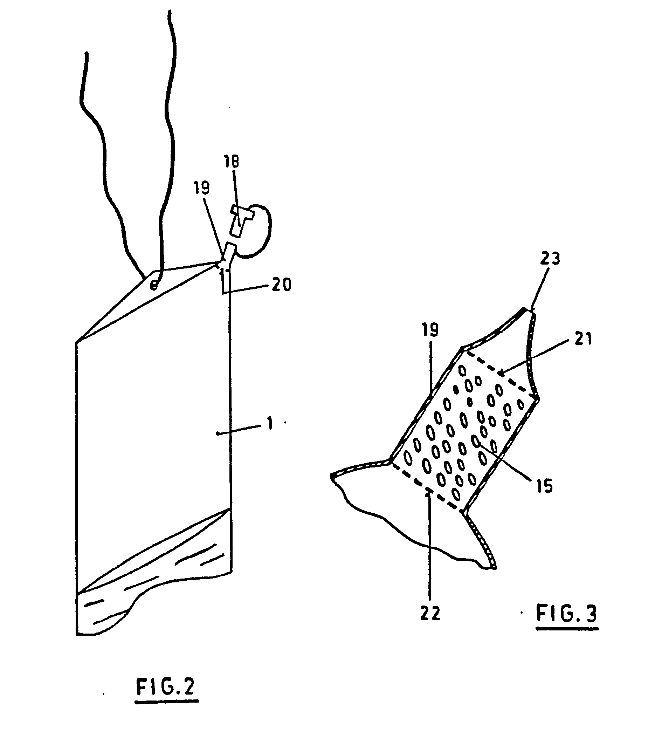

Fig. 2 zeigt den oberen Teil einer abgewandelten Ausführungsform des Folienbeutels 1. Bei dieser Ausführungsform kann loses Ionenaustauschmaterial benutzt werden. Um zu verhindern, daß das lose enthaltene Ionenaustauschmaterial beim Trinken mitgeschluckt wird, ist in einer mit einem Verschlußstöpsel 18 verschließbaren Ausgußöffnung 19 des Folienbeutels 1 ein Filter 20 angeordnet, daß das Ionenaustauschmaterial zurückhält.

Stattdessen kann das Ionenaustauschmaterial 15 (Fig. 3) auch so im Ausguß 19 der Vorrichtung fixiert sein, daß es beim Ausgießen durchflossen wird. Hierzu kann das Ionenaustauschmaterial 15 beispielsweise zwischen zwei Filtern 21, 22 eingeschlossen sein. Die Ausguß- oder Trinköffnung 23 ist hierbei vorzugsweise so eng ausgeführt, daß die dadurch begrenzte Strömungsgeschwindigkeit einen ausreichenden Kontakt der Flüssigkeit mit dem Ionenaustauschmaterial 15 sicherstellt.

Da bei der zuletzt beschriebenen Ausführungsform der restliche Salzgehalt erst beim Trinken aus der Trinkflüssigkeit entfernt wird, fördert der Salzgehalt der im Behälter enthaltenen Flüssigkeit die osmotische Wirkung.

## Patentansprüche

1. Vorrichtung zur Gewinnung von Trinkflüssigkeit aus Meerwasser, verunreinigtem Wasser oder dgl. durch Osmose mit einem Behälter, der einen genießbaren, osmotisch wirksamen Stoff enthält und dessen Außenwand mindestens teilweise aus einer semipermeablen Membran besteht, dadurch gekennzeichnet, daß der Behälter aus einem flüssigkeitsundurchlässigen Sammelbehältnis (1) und einem daran abnehmbar angebrachten Osmoseteil (10) besteht, dessen Außenwand mindestens teilweise aus der semipermeablen Membran (12) besteht.

2. Vorrichtung nach Anspruch 1, dadurch gekennzeichnet, daß das Sammelbehältnis (1) ein Folienbeutel ist.

3. Vorrichtung nach Anspruch 1, dadurch gekennzeichnet, daß das Osmoseteil (10) den genießbaren, osmotisch wirksamen Stoff (14) enthält.

4. Vorrichtung nach Anspruch 1, dadurch gekennzeichnet, daß das Osmoseteil (10) eine flache Kassette ist.

5. Vorrichtung nach Anspruch 1, dadurch gekennzeichnet, daß der Sammelbehälter (1) Ionenaustauschmaterial enthält.

6. Vorrichtung nach Anspruch 1, dadurch gekennzeichnet, daß das Osmoseteil (10) Ionenaustauschmaterial enthält.

7. Vorrichtung nach Anspruch 1, dadurch gekennzeichnet, daß der Behälter Ionenaustauschmaterial (15) in einem flüssigkeitsdurchlässigen Beutel enthält.

8. Vorrichtung nach Anspruch 1, dadurch gekennzeichnet, daß der Behälter in einer Ausgußöffnung (19) ein Filter (20) zum Ausfiltern des Ionenaustauschmaterials aufweist.

9. Vorrichtung nach Anspruch 1, dadurch gekennzeichnet, daß in einem Ausguß (19) des Behältnisses Ionenaustauschmaterial (15) derart untergebrachht ist, daß es beim Ausgießen durchflossen wird.

10. Vorrichtung nach Anspruch 1, dadurch gekennzeichnet, daß die semipermeable Membran (12) mit ihrer aktiven Seite nach innen angebracht ist.

11. Vorrichtung nach Anspruch 1, dadurch gekennzeichnet, daß die Außenseite der semipermeablen Membran (12) mit einer dünnen Schicht eines Wasserlöslichen Materials beschichtet ist.

12. Vorrichtung nach Anspruch 1, dadurch gekennzeichnet, daß die Außenseite der semipermeablen Membran (12) mit einer dünnen Schicht von Öl oder Fett beschichtet ist.

## Claims

1. Apparatus for producing potable liquid from sea water, polluted water or the like by osmosis with a container which contains a drinkable, osmotically active substance, and the outer wall of which is, at least in part, made of a semipermeable membrane, characterised by the fact that the container consists of a collecting receptacle (1) which is impermeable to liquid and an osmosis section (10) detachably fitted to it, the outer wall of which consists, at least in part, of the semi-permeable membrane (12).

2. Apparatus according to Claim 1, characterised by the fact that the collecting receptacle (1) is a film bag.

3. Apparatus according to Claim 1, characterised by the fact that the osmosis section (10) contains the drinkable, osmotically active substance (14).

4. Apparatus according to Claim 1, characterised by the fact that the osmosis section (10) is a flat cassette.

5. Apparatus according to Claim 1, characterised by the fact that the collecting receptacle (1) contains ion-exchange material.

6. Apparatus according to Claim 1, characterised by the fact that the osmosis section (10) contains ion-exchange material.

7. Apparatus according to Claim 1, characterised by the fact that the container contains ion-exchange material (15) in a liquid-permeable bag.

8. Apparatus according to Claim 1, characterised by the fact that the container has a filter (20) in an outlet opening (19) for filtering out the ion-exchange material.

9. Apparatus according to Claim 1, characterised by the fact that, in an outlet (19) of the receptacle, ion-exchange material (15) is accommodated in such a manner that it is flowed through when the contents are poured out.

10. Apparatus according to Claim 1, characterised by the fact that the semi-permeable membrane (12) is fitted with its active side facing inwards.

11. Apparatus according to Claim 1, characterised by the fact that the external side of the semi-permeable membrane (12) is coated with a thin layer of a water-soluble material.

12. Apparatus according to Claim 1, characterised by the fact that the external side of the semi-permeable membrane (12) is coated with a thin layer of oil or grease.

## Revendications

1. Dispositif pour la production d'un liquide potable à partir d'eau de mer, d'eau contaminée ou analogues, par osmose, ce dispositif comportant un récipient contenant une substance consommable à activité osmotique, la paroi extérieure de ce récipient étant constituée au moins partiellement d'une membrane semi-perméable, caractérisé en ce que le récipient est constitué d'un réceptacle collecteur (1) imperméable aux liquides et d'un élément d'osmose (10) qui y est adapté de manière amovible et dont la paroi extérieure est constituée au moins partiellement de la membrane semi-perméable précitée (12).

2. Dispositif selon la revendication 1, caractérisé en ce que le réceptacle collecteur (1) est un sac constitué d'une feuille mince.

3. Dispositif selon la revendication 1, caractérisé en ce que l'élément d'osmose (10) contient une substance consommable et à activité osmotique (14).

4. Dispositif selon la revendication 1, caractérisé en ce que l'élément d'osmose (10) est une cassette plate.

5. Dispositif selon la revendication 1, caractérisé en ce que le récipient collecteur (1) contient une matière échangeuse d'ions.

6. Dispositif selon la revendication 1, caractérisé en ce que l'élément d'osmose (10) contient une matière échangeuse d'ions.

7. Dispositif selon la revendication 1, caractérisé en ce que le récipient contient une matière (15) échangeuse d'ions dans un sac perméable aux liquides.

8. Dispositif selon la revendication 1, caractérisé en ce que le récipient comporte, dans une ouverture d'évacuation (19), un filtre (20) destiné à séparer, par filtration, la matière échangeuse d'ions.

9. Dispositif selon la revendication 1, caractérisé en ce que la matière (15) échangeuse d'ions est disposée dans une ouverture d'évacuation (19) du réceptacle de telle sorte que le liquide y circule lors de l'évacuation.

10. Dispositif selon la revendication 1, caractérisé en ce que la membrane semi-perméable (12) est disposée avec sa face active dirigée vers l'intérieur.

11. Dispositif selon la revendication 1, caractérisé en ce que la face extérieure de la membrane semi-perméable (12) est enduite d'une couche mince d'une matière hydrosoluble.

12. Dispositif selon la revendication 1, caractérisé en ce que la face extérieure de la membrane semi-perméable (12) est enduite d'une couche mince d'huile ou de graisse.

FIG.1

FIG.2

FIG.3